# EUROPÄISCHE PATENTANMELDUNG

(11) **EP 2 256 354 A1**
(43) Veröffentlichungstag der Anmeldung: **01.12.2010**
(21) Anmeldenummer: 10162638.0
(22) Anmeldetag: 12.05.2010
(51) Int. Cl.: F16B 7/04, E04C 3/04

(54) **Profilanordnung**

(30) Priorität: 27.05.2009 DE 102009026512
(71) Anmelder: HILTI Aktiengesellschaft, 9494 Schaan (LI)
(72) Erfinder: Schierscher, Gabriel, 9494 Schaan (LI); Mundwiler, Lukas, 4434 Hoelstein (CH); Kemple, Lorcan, 6971 Hard (AT)

(57) **Zusammenfassung**

Die Erfindung betrifft eine Profilanordnung (11) mit zwei, koaxial hintereinander liegenden Profilträgern (12) und mit einem Verbindungselement (16), wobei das Verbindungselement (16) einen Wert seines Widerstandsmomentes (Wy1) aufweist, der maximal um 10% zu dem Wert des entsprechenden Widerstandsmomentes (Wy2) der Profilträger (12) verschieden ist.

## Beschreibung

Die Erfindung betrifft eine Profilanordnung, der im Oberbegriff des Patentanspruchs 1 genannten Art.

Derartige Profilanordnungen dienen beispielsweise als Teile einer auf mehreren Stützen gelagerten Tragkonstruktion. Insbesondere bei Solarpark-Installationen werden Rahmenkonstruktionen mit solchen Profilanordnungen erstellt, auf denen Solarmodule angeordnet werden.

Da die Profilträger zumeist in Standardlängen angeboten werden, müssen zur Erstellung von längeren Abschnitten mehrere, koaxial hintereinander liegende Profilträger an ihren Stossstellen mittels eines Verbindungselementes miteinander verbunden werden.

Aus der DE 93 00 403 U1 ist eine Profilanordnung mit zwei, koaxial hintereinander liegenden Profilträgern und mit einem Verbindungselement bekannt, das zum Verbinden der Profilträger in Endbereiche der Profilträger eingeführt ist.

Nachteilig an der bekannten Lösung ist, dass die Stossstellen der bekannten Profilanordnung eine geringere Tragfähigkeit als die Profilträger selbst aufweisen. Deshalb kann die Stossstelle der Profilträger, insbesondere bei einer Profilanordnung in Form eines Mehrfeldträgers, der auf mehreren Stützen gelagert ist, aus statischen Gründen nicht beliebig gewählt werden, da ansonsten die Belastung auf die geschaffene Verbindung zu hoch ist.

Aufgabe der Erfindung ist es, eine Profilanordnung zu schaffen, welche die vorgenannten Nachteile nicht aufweist und flexibel in der Ausführung ist.

Die Aufgabe ist durch die Merkmale des unabhängigen Anspruchs gelöst. Vorteilhafte Weiterbildungen sind in den Unteransprüchen dargelegt.

Gemäss der Erfindung weist das Verbindungselement einen Wert seines Widerstandsmomentes auf, der maximal um 10% zu dem Wert des entsprechenden Widerstandsmomentes der Profilträger verschieden ist.

Das Verbindungselement weist somit im Wesentlichen die gleiche Lastkapazität wie die von diesem verbundenen Profilträger auf. Das Widerstandsmoment des Verbindungselementes ist maximal 10% grösser oder kleiner als das entsprechende Widerstandsmoment der Profilträger. Das Widerstandsmoment ist das Mass für den Widerstand, den ein Bauteil mit gegebenem Querschnitt einem Biegemoment entgegensetzt.

Da die geschaffene Stossstelle im Wesentlichen die gleichen Belastungs- sowie Deformationskennwerte wie ein ungetrennter Profilträger aufweist, ist die Position der Stossstelle unabhängig von der Position einer Stütze wählbar. Dadurch sind flexiblere Profilanordnungen möglich und es lassen sich auch Reststücke von bereits abgelängten Profilträgern verwenden, welche ansonsten entsorgt werden müssten.

Der Aufwand bei der Installation beziehungsweise bei der Montage wie auch bei der Planung ist gegenüber herkömmlichen Profilanordnungen massgeblich reduziert. Fehlanwendungen bei der Wahl der Stossstellen, welche zu einem Tragfähigkeitsverlust der Konstruktion führen könnten, sind ausgeschlossen. Weiter lassen sich flexible Trägerkonstruktionen erstellen, ohne auf vorbestimmte Standardlängen oder Standardanordnungen zurückgreifen zu müssen.

Vorzugsweise beträgt die Differenz der Werte der entsprechenden Widerstandsmomente maximal 5%, womit die Lastkapazität des Verbindungselementes noch näher bei der Lastkapazität der Profilträger liegt.

Bevorzugt ist das Verbindungselement ein umfänglich geschlossenes Hohlprofil, welches zur Herstellung im Vergleich zu einem Verbindungselement mit einem Vollquerschnitt weniger Material benötigt und somit wirtschaftlich herstellbar ist. Zudem ist ein derartiges Verbindungselement leichter und somit einfacher handhabbar. Vorteilhaft weist das Verbindungselement flexible Wandabschnitte auf, welche das Anordnen des Verbindungselementes an den Endbereichen der Profilträger vereinfachen.

Vorzugsweise sind an einander gegenüberliegenden Seiten des Hohlprofils, welche parallel zu der entsprechenden Widerstandsachse verlaufen, Materialanhäufungen vorgesehen. Die Materialanhäufungen ermöglichen eine optimierte Ausgestaltung der massgebenden Querschnittsfläche des Verbindungselementes und somit eine einfache Anpassung beziehungsweise Annäherung des Widerstandsmomentes des Verbindungselementes an das entsprechende Widerstandsmoment der zu verbindenden Profilträger. Mit möglichst wenig Material lässt sich durch die gezielt angeordneten Materialanhäufungen ein höchstmöglichstes Widerstandsmoment des Verbindungselementes erzielen. Insbesondere bei einem Verbindungselement mit einem unsymmetrischen Querschnitt sind entsprechend vorgesehene Materialanhäufungen für eine Optimierung des Verbindungselementes in Bezug auf sein Widerstandsmoment vorteilhaft. Aufgrund der Materialanhäufungen können die Seitenwände des Hohlprofils zwischen den Seiten mit den Materialanhäufungen verhältnismässig dünn ausgebildet werden, was beispielsweise die Anordnung von Selbstbohrschrauben in diesem Bereich vereinfacht.

Bevorzugt ist das Verbindungselement zum Verbinden der Profilträger in Endbereiche der Profilträger eingeführt und die Einführtiefe des Verbindungselementes in einen der Profilträger beträgt 50 mm bis 500 mm, wobei der untere Wert eine minimale Verankerung des Verbindungselementes in dem entsprechenden Profilträger zur Übertragung der Kräfte und der obere Wert den Ausgleich von Toleranzen zwischen der Aussenseite des Verbindungselementes und der Innenseite des Endbereichs des entsprechenden Profilträgers sicherstellt. Besonders vorteilhaft beträgt die Einführtiefe des Verbindungselementes in einen der Profilträger 75 mm bis 200 mm.

Vorteilhaft weisen die Profilträger zumindest eine nach innen ragende Sicke in zumindest einer ihren Seitenwänden auf, wobei die zumindest eine Sicke den Innenquerschnitt des Profilträgers bereichsweise verengt. Das Verbindungselement weist vorteilhaft zumindest eine Anschlagsschulter an seiner Aussenseite auf, welche derart angeordnet ist, dass diese mit einem Bereich der zumindest einen Sicke in Anlage bringbar ist und das Verbindungselement weiterhin in die Profilträger einführbar ist. Bei einer Verschiebung des Verbindungselementes in der Ebene des Querschnitts hintergreift die Anschlagsschulter den entsprechenden Bereich der Sicke, womit die Verbindung trotz Toleranzen zwischen dem Verbindungselement und dem Profilträger mit hohen Kräften belastbar ist.

Vorteilhaft wird das an den Profilträger angeordnete Verbindungselement an diesen mit einem Festlegemittel, wie eine Schraube oder ein Klebstoff, fixiert, womit eine sehr tragfähige Verbindung der Profilträger geschaffen wird. Das Verbindungselement kann beispielsweise nur an einem der Profilträger fixiert werden, so dass der anschliessende Profilträger weiterhin auf einem Abschnitt des Verbindungselementes gleiten kann. Somit lassen sich Längenausdehnungen der Profilträger, z. B. aufgrund von Temperaturschwankungen, innerhalb der Konstruktionen ohne Erzeugung von Spannungen ausgleichen.

Die Erfindung wird nachstehend anhand eines Ausführungsbeispieles näher erläutert. Es zeigen:
Fig. 1 Eine Profilanordnung in einer Ansicht;
Fig. 2 eine Detailansicht auf eine Stossstelle zweier Profile; und
Fig. 3 einen Schnitt entlang Linie III-III in Fig. 2 in vergrösserter Darstellung.

Grundsätzlich sind in den Figuren gleiche Teile mit den gleichen Bezugszeichen versehen.

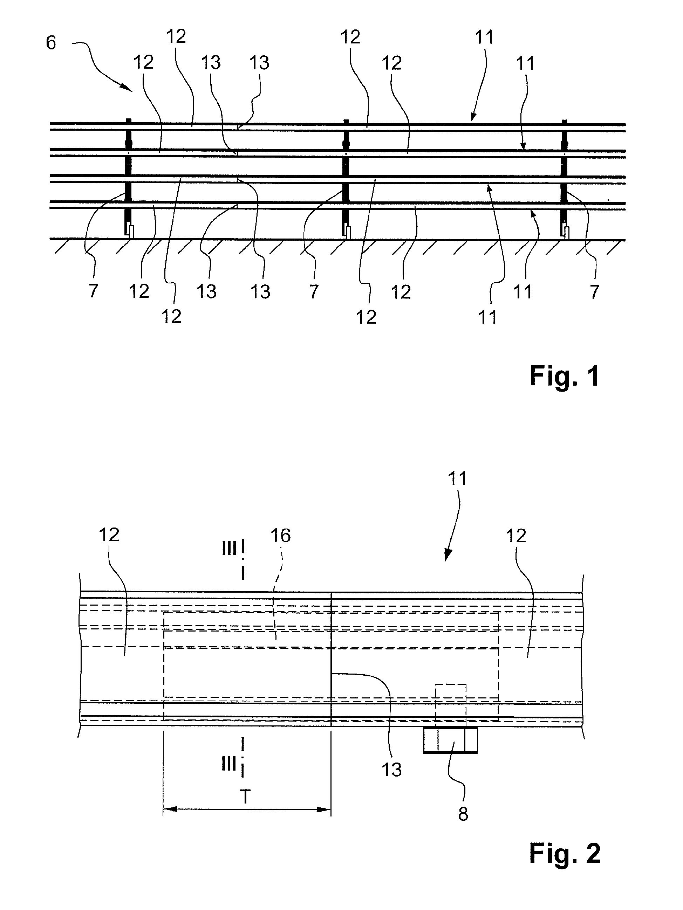

In der Figur 1 ist eine Tragkonstruktion 6 für hier nicht dargestellte Solarpanelle gezeigt, welche vier, auf Stützen 7 gelagerte Profilanordnungen 11 aufweist. Jede Profilanordnung 11 weist in diesem Beispiel zwei, koaxial hintereinander liegende Profilträger 12 auf, die an ihren Stossstellen 13 mit einem Verbindungselement 16 verbunden sind. Jedes Verbindungselement 16 ist zum Verbinden der Profilträger 16 in den entsprechenden Endbereich der Profilträger 12 eingeführt. Die Profilträger 12 sind Hohlprofile, die beispielsweise als Stranggussprofile aus Aluminium ausgebildet sind.

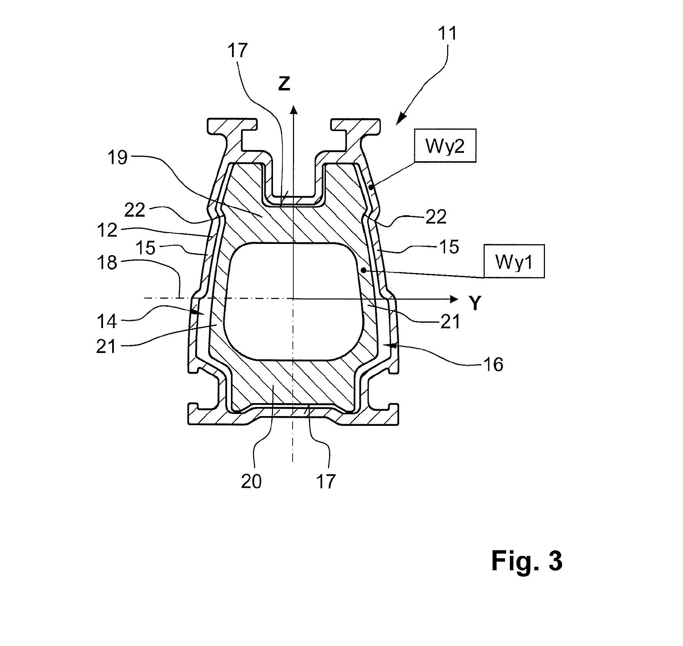

Jedes Verbindungselement 16 (siehe Fig. 3) weist einen Wert seines Widerstandsmomentes Wy1 auf, der maximal um 10%, vorteilhaft maximal um 5%, zu dem Wert des entsprechenden Widerstandsmomentes Wy2 der Profilträger 12 verschieden ist. Das Verbindungselement 16 ist ein umfänglich geschlossenes Hohlprofil, welches beispielsweise als Stranggussprofil aus Aluminium gefertigt ist. Das Verbindungselement 16 weist einen unsymmetrischen Querschnitt auf, der zum Einführen in den Endbereich des Profilträgers 12 entsprechend dem Innenquerschnitt 14 des Profilträgers 12 ausgebildet ist. An einander gegenüberliegenden Seiten 17 des Hohlprofils, welche parallel zu der entsprechenden Widerstandsachse 18 verlaufen, sind Materialanhäufungen 19 und 20 vorgesehen, womit die belastbare Querschnittsfläche des Verbindungselementes 16 in Bezug auf das Widerstandsmomentes Wy1 optimiert ist.

Die Profilträger 12 weisen an einander gegenüberliegen Seitenwänden je eine nach innen ragende Sicke 15 auf, welche den Innenquerschnitt 14 des Profilträgers 12 bereichsweise verengt. Das Verbindungselement 16 weist verhältnismässig dünne Seitenwände 21 sowie je zumindest eine Anschlagsschulter 22 an seiner Aussenseite auf. Die Anschlagsschultern 22 sind derart angeordnet, dass das Verbindungselement 16 weiterhin in die Profilträger 12 einführbar ist sowie zumindest eine der Anschlagsschultern 22 bei einer Verschiebung des Verbindungselementes 16 in der Ebene des Querschnitts mit einem Bereich der Sicke 15 in Anlage bringbar ist und dabei diesen Bereich der Sicke 15 zumindest teilweise hintergreift.

Die Einführtiefe T des Verbindungselementes 16 in einen der Profilträger 12 beträgt 50 mm bis 500 mm, vorteilhaft 75 mm bis 200 mm. Ein Abschnitt des in den Profilträger 12 eingeführten Verbindungselementes 16 ist mit einem Festlegemittel in Form einer Schraube 8 an einem Profilträger 12 fixiert (siehe Fig. 2).

## Patentansprüche

1. Profilanordnung mit zumindest zwei, koaxial hintereinander liegenden Profilträgern (12) und mit einem Verbindungselement (16) zum Verbinden der Profilträger (12), **dadurch gekennzeichnet, dass**
das Verbindungselement (16) einen Wert seines Widerstandsmomentes (Wy1) aufweist, der maximal um 10% zu dem Wert des entsprechenden Widerstandsmomentes (Wy2) der Profilträger (12) verschieden ist.

2. Profilanordnung nach Anspruch 1, **dadurch gekennzeichnet, dass** die Differenz der Werte der entsprechenden Widerstandsmomente (Wy1, Wy2) maximal 5% beträgt.

3. Profilanordnung nach Anspruch 1 oder 2, **dadurch gekennzeichnet, dass** das Verbindungselement (16) ein umfänglich geschlossenes Hohlprofil ist.

4. Profilanordnung nach Anspruch 3, **dadurch gekennzeichnet, dass** an einander gegenüberliegenden Seiten (17) des Hohlprofils, welche parallel zu der entsprechenden Widerstandsachse (18) verlaufen, Materialanhäufungen (19, 20) vorgesehen sind.

5. Profilanordnung nach einem der Ansprüche 1 bis 4, **dadurch gekennzeichnet, dass** das Verbindungselement (16) zum Verbinden der Profilträger (12) in Endbereiche der Profilträger (12) eingeführt ist und die Einführtiefe (T) des Verbindungselementes (16) in einen der Profilträger (12) 50 mm bis 500 mm beträgt.

6. Profilanordnung nach Anspruch 5, **dadurch gekennzeichnet, dass** die Einführtiefe (T) des Verbindungselementes (16) in einen der Profilträger (12) 75 mm bis 200 mm beträgt.
